# EUROPÄISCHE PATENTANMELDUNG

(11) **EP 1 460 305 A1**
(43) Veröffentlichungstag der Anmeldung: **22.09.2004**
(21) Anmeldenummer: 03006421.6
(22) Anmeldetag: 21.03.2003
(51) Int. Cl.: F16H 3/00, F16H 61/04

(54) **Wechselgetriebe**

(71) Anmelder: BorgWarner Inc., Auburn Hills, MI 48236-1782 (US)
(72) Erfinder: Bauer, Karl-Heinz, 76676 Graben-Neudorf (DE)
(74) Vertreter: Patentanwälte Westphal, Mussgnug & Partner

(57) **Zusammenfassung**

Die Erfindung betrifft ein Wechselgetriebe (1) mit mehreren wählbaren Gangstufen und mit zumindest einer Antriebswelle (5, 6) und zumindest einer Abtriebswelle (14) auf denen jeweils mehrere Zahnräder (7, 8, 9, 10, 11, 12, 13) und (15, 16, 17, 18, 19, 20, 21) gelagert sind, wobei jeweils ein Zahnrad (7, 8, 9, 10, 11, 12, 13) einer Antriebswelle (5, 6) und ein mit diesem in kämmendem Eingriff stehendes Zahnrad (15, 16, 17, 18, 19, 20, 21) einer Abtriebswelle (14) ein Zahnradpaar (7, 15; 8, 16; 9, 17; 10, 18; 11, 19; 12, 20; 13, 21) bilden, und wobei eine Gangstufe dadurch festlegbar ist, in dem beide Zahnräder eines Zahnradpaares (7, 15; 8, 16; 9, 17; 10, 18; 11, 19; 12, 20; 13, 21) drehfest auf der Antriebswelle (5, 6) und der Abtriebswelle (14) gelagert werden, und jeweils zumindest ein Zahnrad der übrigen Zahnradpaare (7, 15; 8, 16; 9, 17; 10, 18; 11, 19; 12, 20; 13, 21) drehbar auf einer der Antriebswellen (5, 6) oder Abtriebswellen (14) gelagert wird, und wobei ein Zahnradpaar (11, 19) ein drehrichtungsabhängig sperrend gelagertes Zahnrad (19) aufweist, welches abhängig davon, ob das teilsperrend gelagerte Zahnrad (19) durch die Antriebswelle (5, 6) oder Abtriebswelle (14) oder durch das mit ihm in kämmendem Eingriff stehende Zahnrad (11) getrieben wird, drehfest mit der Antriebswelle (5, 6) oder Abtriebswelle (14) verbunden ist oder drehbar auf der Antriebs- (5, 6) oder Abtriebswelle (14) gelagert ist.

## Beschreibung

Die Erfindung betrifft ein Wechselgetriebe gemäß dem Oberbegriff des Anspruchs 1.

Die Erfindung geht von einem Wechselgetriebe mit mehreren wählbaren Gangstufen an sich bekannter Art aus. Ein solches Wechselgetriebe weist eine mit einem Motor verbundene Antriebswelle und eine Abtriebswelle auf, auf denen jeweils Zahnräder gelagert sind. Hierbei bilden ein auf einer Antriebswelle gelagertes Zahnrad, welches mit einem auf einer Abtriebswelle gelagerten Zahnrad in kämmendem Eingriff steht ein Zahnradpaar. Bei den bekannten Wechselgetrieben ist eine Gangstufe dadurch wählbar, in dem beide Zahnräder eines Zahnradpaares drehfest mit der Antriebswelle und mit der Abtriebswelle verbunden werden, und bei den übrigen Zahnradpaaren jeweils zumindest ein Zahnrad drehbar auf der Antriebs- bzw. Abtriebswelle gelagert ist. Dadurch wird das Drehmoment des Motors von der Antriebswelle über das Zahnradpaar, bei dem beide Zahnräder drehfest mit den jeweiligen Wellen verbunden sind, auf die Abtriebswelle übertragen. Die übrigen Zahnradpaare sind in die Drehmomentübertragung des Motors nicht eingeschaltet, da jeweils ein Zahnrad des Zahnradpaares drehbar mit der lagernden Antriebs- bzw. Abtriebswelle verbunden ist.

Die Funktionsweise des Hoch- und Rückschaltvorgangs bei den aus dem Stand der Technik bekannten Wechselgetrieben soll im folgenden beispielhaft anhand solcher Wechselgetriebe beschrieben werden, bei denen sämtliche Zahnräder drehfest auf einer Antriebswelle gelagert sind und sämtliche auf der Abtriebswelle gelagerten Zahnräder mit dieser, abhängig von der gewählten Gangstufe, entweder drehfest oder drehbar verbunden sind.

Handelt es sich um ein Wechselgetriebe mit nur einer Antriebswelle, so wird bei einem Gangstufenwechsel von einer ersten Gangstufe in eine zweite Gangstufe zuerst die Verbindung zwischen Motor und Antriebswelle durch das Kupplungssystem getrennt. Des Weiteren wird das Zahnrad des zweiten Gangs auf die Geschwindigkeit der Abtriebswelle synchronisiert, die drehfeste Verbindung zwischen dem auf der Abtriebswelle gelagerten Zahnrad der ersten Gangstufe gelöst und das Zahnrad der zweiten Gangstufe mit der Abtriebswelle drehfest verbunden. Daran anschließend wird die Verbindung zwischen Motor und Antriebswelle durch Schließen des Kupplungssystems wieder hergestellt.

Bei einem Doppelkupplungsgetriebe mit zwei voneinander unabhängig antreibbaren Antriebswellen erfolgt ein Gangstufenwechsel von einer ersten Gangstufe in eine zweite Gangstufe, wobei die beiden Gangstufen jeweils von einer der beiden unabhängigen Antriebswellen antreibbar sind, dadurch, dass bei bestehender Verbindung zwischen Motor und erster Gangstufe das auf der Abtriebswelle gelagerte Zahnrad der zweiten Gangstufe auf die Drehgeschwindigkeit der Abtriebswelle synchronisiert und mit dieser drehfest verbunden wird. Der eigentliche Gangstufenwechsel erfolgt durch Lösen der Verbindung zwischen Motor und der mit der ersten Gangstufe verbundenen Antriebswelle und Herstellen der Verbindung zwischen Motor und der mit der zweiten Gangstufe verbundenen Antriebswelle. Um eine Überdrehzahl der mit der ersten Gangstufe verbundenen Antriebswelle zu verhindern, muss beim Einkuppeln der zweiten Gangstufe unmittelbar die drehfeste Verbindung des Zahnrads der ersten Gangstufe mit der Abtriebswelle gelöst werden, so dass dieses drehbar auf der Abtriebswelle gelagert ist.

Beim Rückschaltvorgang von einer zweiten Gangstufe in eine erste Gangstufe ergibt sich sowohl bei Wechselgetrieben mit nur einer Antriebswelle wie auch bei Wechselgetrieben mit zwei Antriebswellen das Problem, dass das auf der Abtriebswelle gelagerte Zahnrad der ersten Gangstufe auf die höhere Drehgeschwindigkeit der Abtriebswelle synchronisiert werden muss. Bei diesem Synchronisationsvorgang müssen des Weiteren das mit dem Zahnrad der Abtriebswelle in kämmendem Eingriff stehende und auf der Antriebswelle gelagerte Zahnrad der ersten Gangstufe sowie die Kupplungseinrichtung beschleunigt werden. Dies ist bei einem großen Übersetzungssprung zwischen der zweiten und ersten Gangstufe mit hohen Beschleunigungskräften und Kupplungsschleppmomenten verbunden. Daraus resultiert ein reibleistungsintensiver Vorgang, der im Allgemeinen nur durch verstärkte Synchronisationseinrichtungen bewerkstelligt werden kann. Entsprechende Geräusche sowie Beschleunigungsdrehmomente, die eine Rückwirkung auf die Fahrzeugverzögerung bewirken sind die Folge.

Der vorliegenden Erfindung liegt somit die Aufgabe zugrunde, ein Wechselgetriebe der vorstehend genannten Art derart weiterzubilden, dass die vorstehend beschriebenen Synchronisationseffekte bei zumindest einer Gangstufe nicht mehr auftreten.

Diese Aufgabe wird durch ein Wechselgetriebe mit den Merkmalen des Anspruchs 1 erfindungsgemäß gelöst. Vorteilhafte Ausführungsformen und Weiterbildungen der Erfindung sind in den Unteransprüchen angegeben.

Das erfindungsgemäße Wechselgetriebe weist zusätzlich zu den Merkmalen der bekannten Wechselgetriebe ein Zahnradpaar mit einem drehrichtungsabhängig sperrend gelagerten Zahnrad auf, welches abhängig davon, ob das drehrichtungsabhängig sperrend gelagerte Zahnrad durch die lagernde Antriebs- oder Abtriebswelle oder durch das andere Zahnrad des Zahnradpaares getrieben wird, drehfest oder drehbar mit der Antriebs- oder Abtriebswelle verbunden ist.

Da auf das drehrichtungsabhängig sperrend gelagerte Zahnrad sowohl die lagernde Antriebs- bzw. Abtriebswelle als auch das mit den drehrichtungsabhängig sperrend gelagerten Zahnrad in kämmendem Eingriff stehende Zahnrad einwirken, wird das drehrichtungsabhängig sperrend gelagerte Zahnrad von der Komponente getrieben, deren Drehmomenteinwirkung dominiert.

Das Prinzip der Erfindung soll an folgendem, die Idee der Erfindung nicht einschränkendem Beispiel erläutert werden, bei dem das drehrichtungsabhängig sperrend gelagerte Zahnrad drehfest auf der Abtriebswelle gelagert ist, wenn das drehrichtungsabhängig sperrend gelagerte Zahnrad durch das mit ihm in kämmendem Eingriff stehende Zahnrad getrieben wird und bei dem das drehrichtungsabhängig sperrend gelagerte Zahnrad drehbar auf der Abtriebswelle gelagert ist, wenn das drehrichtungsabhängig sperrend gelagerte Zahnrad durch die lagernde Abtriebswelle getrieben wird. Hier legen das drehrichtungsabhängig sperrende Zahnrad und das mit ihm in kämmendem Eingriff stehende Zahnrad beispielsweise das Zahnradpaar einer ersten Gangstufe fest:

Befindet sich das Wechselgetriebe in einer zweiten Gangstufe, so wird das Motordrehmoment von der oder einer der Antriebswellen über das die zweite Gangstufe festlegende Zahnradpaar auf die Abtriebswelle übertragen. Dies hat zur Folge, dass die Abtriebswelle das drehrichtungsabhängig sperrende Zahnrad treibt und das drehrichtungsabhängig sperrende Zahnrad somit auf der Abtriebswelle drehbar gelagert ist. Beim Wechsel (beispielsweise Rückschalten) in die erste Gangstufe, welche durch das Zahnradpaar mit dem drehrichtungsabhängig sperrend gelagerten Zahnrad festgelegt wird, müsste bei den aus dem Stand der Technik bekannten Wechselgetrieben das auf der Abtriebswelle gelagerte Zahnrad zuerst auf die Drehgeschwindigkeit der Abtriebswelle synchronisiert und anschließend mit der Abtriebswelle fest verbunden werden. Beim erfindungsgemäßen Wechselgetriebe entfällt der Synchronisationsvorgang, da nach Trennen der Übertragung des Motordrehmoments durch die zweite Gangstufe nunmehr das drehrichtungsabhängig sperrend gelagerte Zahnrad bei Erhöhung des Motordrehmoments zunehmend von dem mit ihm in kämmendem Eingriff stehenden Zahnrad der Antriebswelle getrieben wird. Übersteigt das Drehmoment des Motors, welches über das Zahnrad der Antriebswelle auf das drehrichtungsabhängig sperrende Zahnrad ausgeübt wird, das Drehmoment der Abtriebswelle, so wird das drehrichtungsabhängig sperrend gelagerte Zahnrad ab diesem Moment drehfest auf der Abtriebswelle gelagert. Dies hat zur Folge, dass nunmehr das Motordrehmoment über die erste Gangstufe von der Antriebswelle auf die Abtriebswelle übertragen wird. Eine Synchronisation ist demzufolge bei einem Wechselgetriebe mit einem Zahnradpaar mit einem drehrichtungsabhängig sperrend gelagerten Zahnrad nicht notwendig.

Befindet sich das Wechselgetriebe in der ersten Gangstufe, so wird das drehrichtungsabhängig sperrend gelagerte Zahnrad durch das mit ihm in kämmenden Eingriff stehende Zahnrad angetrieben. Das drehrichtungsabhängig sperrende Zahnrad ist somit drehfest auf der Abtriebswelle gelagert.

Beim Wechsel in die zweite Gangstufe (bspw. Hochschalten) wird das Motordrehmoment nunmehr über das die zweite Gangstufe festlegende Zahnradpaar auf die Abtriebswelle übertragen. Daraus folgt, dass das drehrichtungsabhängig sperrende Zahnrad nun durch die Abtriebswelle angetrieben wird. Das drehrichtungsabhängig sperrend gelagerte Zahnrad ist somit drehbar auf der Abtriebswelle gelagert. Ein separates Lösen der drehfesten Verbindung zwischen Zahnrad und Abtriebswelle, wie bei den aus dem Stand der Technik bekannten Wechselgetrieben, entfällt.

Eine bevorzugte Ausführungsform der Erfindung sieht vor, dass das drehrichtungsabhängig sperrend gelagerte Zahnrad mittels einer Freilaufeinrichtung auf einer Antriebs- oder Abtriebswelle gelagert ist. Hierbei ist beispielsweise ein Rollenfreilauf denkbar, bei dem Rollen von Federn in einer Drehrichtung in einen sich verengenden Spalt zwischen einem Außen- und Innenring gedrückt werden. Hierbei ist beispielsweise der Außenring mit einem Zahnrad und der Innenring mit einer Antriebsoder Abtriebswelle verbunden. Treibt der Außenring den Innenring in Richtung der Federkraft an, so werden die Rollen eingeklemmt und es entsteht eine kraftschlüssige Verbindung, d. h. das Zahnrad wird drehfest auf der Antriebs- oder Abtriebswelle gelagert. Beim Antrieb durch den Innenring wird diese kraftschlüssige Verbindung aufgehoben, d. h. das Zahnrad ist drehbar auf der Antriebs- oder Abtriebswelle gelagert.

Eine weiter bevorzugte Ausführungsform der Erfindung sieht ein Wechselgetriebe mit zwei Antriebswellen und einer Abtriebswelle vor. Eine darauf basierende Weiterbildung der Erfindung sieht vor, dass eine Antriebswelle als Hohlwelle und eine andere Antriebswelle eine zur Hohlwelle konzentrisch verlaufende Vollwelle ist.

Um die beiden Antriebswellen unabhängig voneinander antreiben zu können, sieht eine weitere bevorzugte Ausführungsform der Erfindung ein Kupplungssystem vor, bei welchem jeweils eine Kupplungseinheit für jede Antriebswelle vorgesehen ist, und bei dem die Kraftübertragung jeweils nur zwischen Motor und einer einzigen Antriebswelle herstellbar ist.

Die Erfindung wird nachfolgend anhand eines beispielhaft bevorzugten Ausführungsbeispiels näher beschrieben. Es zeigen:
- Figur 1: Eine schematische Darstellung eines erfindungsgemäßen Wechselgetriebes,
- Figur 2: eine schematische Darstellung des erfindungsgemäßen Wechselgetriebes in grober Vereinfachung zur Erläuterung des Drehmomentflusses in einer ersten und in einer zweiten Gangstufe.

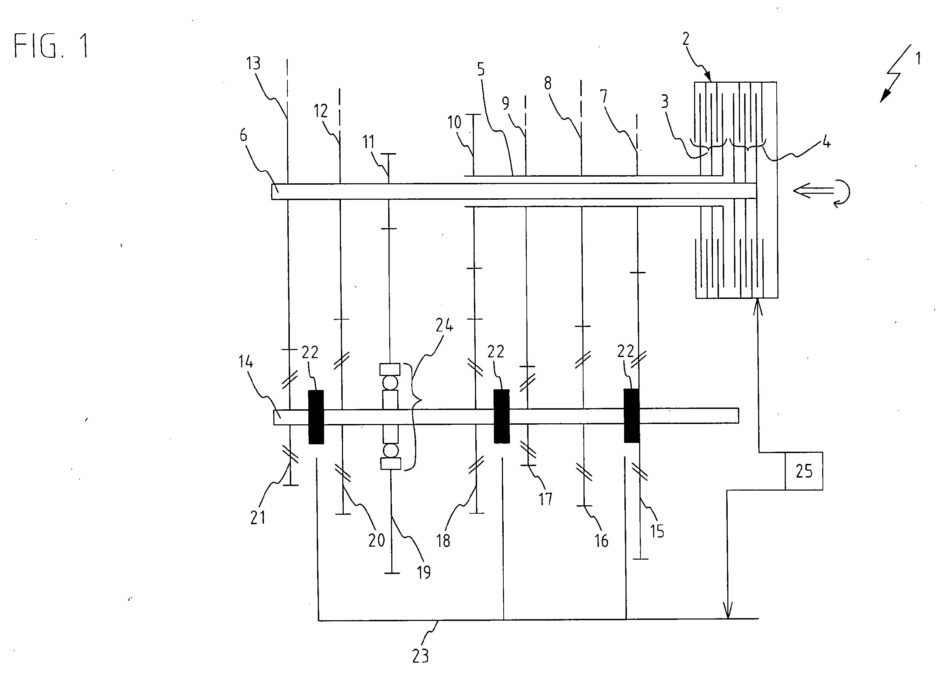

Die Figur 1 zeigt ein erfindungsgemäßes als Doppelkupplungsgetriebe 1 ausgebildetes Wechselgetriebe. Das Doppelkupplungsgetriebe 1 weist ein Kupplungssystem 2 mit einer Kupplungseinheit 3 und einer Kupplungseinheit 4 auf. Die Kupplungseinheit 3 steht mit einer als Hohlwelle 5 ausgebildeten Antriebswelle in Wirkverbindung. Die Kupplungseinheit 4 steht mit einer als Vollwelle 6 ausgebildeten Antriebswelle in Wirkverbindung. Die Vollwelle 6 verläuft abschnittweise in der Hohlwelle 5 und ist zu dieser konzentrisch angeordnet. Auf der Hohlwelle 5 sind Zahnräder 7, 8, 9 und 10 drehfest gelagert. Auf der Vollwelle 6 sind Zahnräder 11, 12 und 13 drehfest gelagert. Des Weiteren weist das Doppelkupplungsgetriebe 1 eine Abtriebswelle 14 auf, auf welcher die Zahnräder 15, 16, 17, 18, 19, 20 und 21 gelagert sind. Die Zahnräder 15, 16, 17, 18, 20 und 21 sind wechselnd drehfest oder drehbar mit der Antriebswelle 14 verbindbar. Eine drehfeste Verbindung einer der Zahnräder 15, 16, 17, 18, 20 und 21 ist mit der Abtriebswelle 14 dann herstellbar, wenn eine mit der Abtriebswelle 14 drehfest verbundene und auf dieser axial verschiebbare Schaltmuffe 22 in eines der Zahnräder 15, 16, 17, 18, 20 oder 21 seitlich eingreift. In diesem Zusammenhang ist anzumerken, dass anstelle der Schaltmuffe 22 das Getriebe auch mit einem Drehmomentschalteinrichtungsgangrad oder mit einer Synchronisationseinrichtung ausgestattet sein kann. Die Schaltmuffen 22 sind mittels eines Gangaktuators 23 betätigbar. Hierbei wird die Gangstufe gewählt, deren auf der Abtriebswelle gelagertes Zahnrad durch den seitlichen Eingriff einer der Schaltmuffen drehfest auf der Abtriebswelle gelagert wird.

Die Figur 1 zeigt eine Getriebeposition, bei welcher die Schaltmuffe 22 in das Zahnrad 15 eingreift, so dass dieses drehfest mit der Abtriebswelle 14 verbunden ist. Die übrigen Zahnräder 16, 17, 18, 20 und 21 sind dagegen drehbar auf der Abtriebswelle 14 gelagert. Das Zahnrad 19 ist mittels einer Freilaufeinrichtung 24 auf der Abtriebswelle 14 gelagert. Das Zahnrad 19 ist somit drehrichtungsabhängig sperrend gelagert. Im vorliegenden Ausführungsbeispiel ist das drehrichtungsabhängig sperrend gelagerte Zahnrad 19 drehfest mit der Abtriebswelle 14 verbunden, wenn es von dem mit ihm in kämmendem Eingriff stehenden Zahnrad 11 getrieben wird, und drehbar auf der Abtriebswelle 14 gelagert, wenn dieses von der Abtriebswelle 14 getrieben wird.

Das Doppelkupplungsgetriebe 1 weist sechs wählbare Vorwärtsgangstufen und eine wählbare Rückwärtsgangstufe auf. Jede Gangstufe ist durch ein Zahnradpaar festgelegt. Hierbei bildet jeweils ein Zahnrad 7, 8, 9, 10, 11, 12, 13 der Antriebswellen 5 und 6 mit einem mit ihm in kämmendem Eingriff stehenden Zahnrad 15, 16, 17, 18, 19, 20, 21 der Abtriebswelle ein Zahnradpaar. So bilden beispielsweise die Zahnräder 7 und 15 ein eine Gangstufe festlegendes Zahnradpaar. Im vorliegenden Ausführungsbeispiel bilden die Zahnradpaare 7, 15 bzw. 11, 19 die zweite bzw. erste Gangstufe. In der Figur 1 ist zu erkennen, dass eine der Schaltmuffen 22 in das Zahnrad 15 seitlich eingreift. Daraus folgt, dass beim dargestellten Doppelkupplungsgetriebe 1 die zweite, durch das Zahnradpaar 7, 15 festgelegte Gangstufe eingelegt ist.

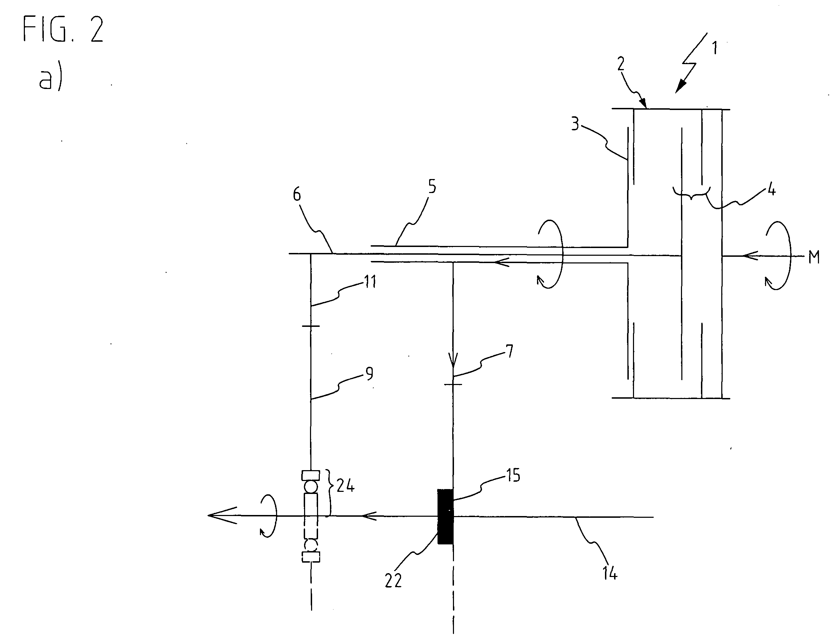

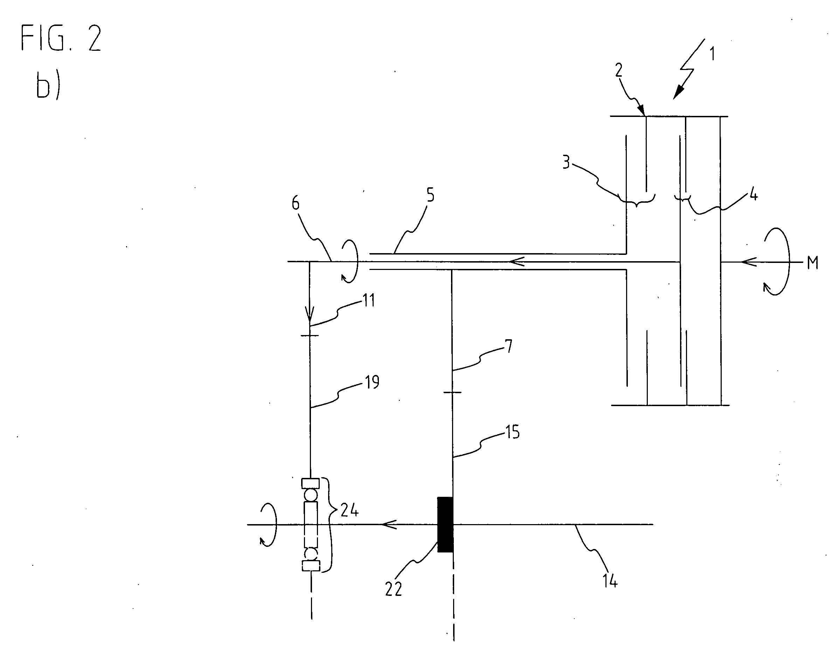

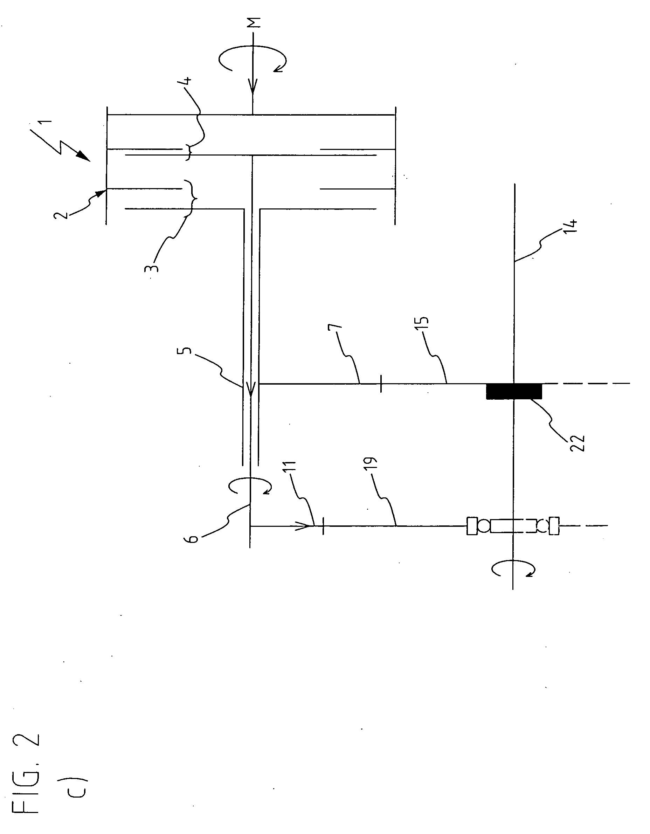

Die Figur 2 zeigt abschnittweise Komponenten des erfindungsgemäßen Doppelkupplungsgetriebes 1, um die Übertragung des Motordrehmoments M in verschiedenen Gangstufen zu veranschaulichen.

In der Figur 2 sind die übertragenen Drehmomente jeweils durch Pfeile entlang den Zahnrädern und Achsen dargestellt.

Die Figur 2a zeigt das Doppelkupplungsgetriebe 1 bei eingelegter zweiter Gangstufe und eingekuppelter Kupplungseinheit 3. Dies bedeutet, dass das Motordrehmoment M über die Kupplungseinheit 3 auf die Hohlwelle 5 übertragen wird. Die Hohlwelle 5 überträgt das Motordrehmoment M auf das auf ihr drehfest gelagerte Zahnrad 7, welches mit dem auf der Abtriebswelle 14 gelagerten Zahnrad 15 in kämmendem Eingriff steht. Das Zahnrad 15 wird durch die Schaltmuffe 22 drehfest auf der Abtriebswelle 14 gelagert und überträgt das Motordrehmoment M somit auf die Abtriebswelle 14. Aufgrund der Freilaufeinrichtung 24, welche beim Antrieb der Abtriebswelle 14 eine drehbare Verbindung zwischen drehrichtungsabhängig sperrend gelagertem Zahnrad 19 und Abtriebswelle 14 herstellt, wird auf das drehrichtungsabhängig sperrend gelagerte Zahnrad 19 durch die Abtriebswelle 14 kein Drehmoment übertragen. Bei triebswelle 14 kein Drehmoment übertragen. Bei einem aus dem Stand der Technik bekannten Doppelkupplungsgetriebe, welches kein teilsperrend gelagertes Zahnrad 19 aufweist, müsste das Zahnrad dieser ersten Gangstufe bei Betrieb der zweiten Gangstufe von der Abtriebswelle 14 entkoppelt werden, d. h. drehbar auf dieser gelagert sein. Dies würde dadurch erreicht, indem die Schaltmuffe 22 nicht in das Zahnrad eingreift.

Die Figur 2b zeigt das Doppelkupplungsgetriebe 1 während eines Ruckschaltvorgangs von der zweiten Gangstufe in die erste Gangstufe. Bei einem aus dem Stand der Technik bekannten Doppelkupplungsgetriebe müsste beim Rückschaltvorgang von einer höheren in eine niedrigere Gangstufe das auf der Abtriebswelle sitzende Zahnrad der kleineren Gangstufe auf die Drehgeschwindigkeit der Abtriebswelle synchronisiert werden. Da mit dem Zahnrad der Abtriebswelle auch gleichzeitig das mit ihm in kämmendem Eingriff stehende Zahnrad der Antriebswelle sowie die Welle und die Kupplungseinheit beschleunigt werden müssen, stellt dies einen reibleistungsintensiven Vorgang dar.

Die Synchronisation des auf der Abtriebswelle angeordneten Zahnrads der kleinern Gangstufe entfällt beim erfindungsgemäßen Doppelkupplungsgetriebe 1. Wie aus der Figur 2b zu entnehmen ist, ist die Übertragung des Motordrehmoments M durch die zweite Gangstufe unterbrochen, da die Kupplungseinheit 3 geöffnet ist. Dagegen wird das Motordrehmoment M durch die geschlossene Kupplungseinheit 4 auf die Vollwelle 6 und damit auf das auf der Vollwelle 6 angeordnete Zahnrad 11 sowie von diesem auf das drehrichtungsabhängig sperrend gelagerte Zahnrad 19 der Abtriebswelle 14 übertragen (siehe Pfeile auf Zahnrad 11). Ein weiteres Drehmoment, welches aufgrund der bisherigen Drehbewegung der Abtriebswelle 14 vorhanden ist, wirkt von der Abtriebswelle 14 auf das drehrichtungsabhängig sperrend gelagerte Zahnrad 19 ein. Eine Synchronisation wie bei den aus dem Stand der Technik bekannten Doppelkupplungsgetrieben ist hierbei nicht notwendig, da die Freilaufeinrichtung 24 gewährleistet, dass abhängig vom treibenden Drehmoment das teilsperrend gelagerte Zahnrad 19 entweder drehfest auf der Abtriebswelle 14 oder drehbar auf der Abtriebswelle 14 gelagert ist. Dies bedeutet, dass die Kupplungseinheit 4 ohne vorherige Synchronisation geschlossen werden kann. Aufgrund der Freilaufeinrichtung 24 ist das teilsperrend gelagerte Zahnrad 19 solange auf der Abtriebswelle 14 drehbar gelagert, bis das Motordrehmoment M, welches über die Vollwelle 6 und das Zahnrad 11 auf das teilsperrend gelagerte Zahnrad 19 eingebracht wird, das von der Abtriebswelle 14 auf die Freilaufeinrichtung 24 eingebrachte Drehmoment übersteigt. Ist dieser Punkt erreicht, so ist das drehrichtungsabhängig sperrend gelagerte Zahnrad 19 drehfest mit der Abtriebswelle 14 verbunden.

Die Figur 2c zeigt das erfindungsgemäße Doppelkupplungsgetriebe 1 im Zustand, in dem das drehrichtungsabhängig sperrend gelagerte Zahnrad 19 durch das mit diesem in kämmendem Eingriff stehende Zahnrad 11 getrieben wird. Somit sperrt die Freilaufeinrichtung 24, so dass das drehrichtungsabhängig sperrend gelagerte Zahnrad 19 drehfest auf der Abtriebswelle 14 gelagert ist.

### Bezugszeichenliste

- 1: Doppelkupplungsgetriebe
- 2: Kupplungssystem
- 3: Kupplungseinheit
- 4: Kupplungseinheit
- 5: Hohlwelle
- 6: Hohlwelle
- 7: Zahnrad (Hohlwelle)
- 8: Zahnrad (Hohlwelle)
- 9: Zahnrad (Hohlwelle)
- 10: Zahnrad (Hohlwelle)
- 11: Zahnrad (Vollwelle)
- 12: Zahnrad (Vollwelle)
- 13: Zahnrad (Vollwelle)
- 14: Abtriebswelle
- 15: Zahnrad (Abtriebswelle)
- 16: Zahnrad (Abtriebswelle)
- 17: Zahnrad (Abtriebswelle)
- 18: Zahnrad (Abtriebswelle)
- 19: Zahnrad (Abtriebswelle)
- 20: Zahnrad (Abtriebswelle)
- 21: Zahnrad (Abtriebswelle)
- 22: Schaltmuffe (auch Drehmomentschalteinrichtungsgangrad bzw. Synchroneinrichtung).
- 23: Gangaktuator
- 24: Freilaufeinrichtung
- 25: Elektronische Getriebesteuerung
- M: Motordrehmoment

## Patentansprüche

1. Wechselgetriebe (1) mit wählbaren Gangstufen und mit einer Antriebswelle (5) und einer Abtriebswelle (6) auf denen jeweils Zahnräder (7, 8, 9, 10, 11, 12, 13) und (15, 16, 17, 18, 19, 20, 21) gelagert sind, wobei jeweils ein Zahnrad (7, 8, 9, 10, 11, 12, 13) einer Antriebswelle (5, 6) und ein mit diesem in kämmendem Eingriff stehendes Zahnrad (15, 16, 17, 18, 19, 20, 21) einer Abtriebswelle (14) ein Zahnradpaar (7, 15; 8, 16; 9, 17; 10, 18; 12, 20; 13, 21) bilden, und wobei eine Gangstufe dadurch wählbar ist, indem beide Zahnräder eines Zahnradpaares (7, 16; 8, 16; 9, 17; 10, 18; 11, 19; 12, 20; 13, 21) drehfest mit der Antriebs- (5, 6) und der Abtriebswelle (14) verbunden werden, und jeweils zumindest ein Zahnrad der übrigen Zahnradpaare (7, 15; 8, 16; 9, 17; 10, 18; 11, 19; 12, 20) auf einer der Antriebs- (5, 6) oder Abtriebswellen (14) drehbar gelagert wird,
**dadurch gekennzeichnet,**
**dass** ein Zahnradpaar (11, 19) ein drehrichtungsabhängig sperrend gelagertes Zahnrad (19) aufweist welches abhängig davon, ob das dreheinrichtungsabhängig sperrend gelagerte Zahnrad (19) durch die lagernde Antriebs- (5, 6) oder Abtriebswelle (14) oder durch das andere Zahnrad (11) des Zahnradpaares (11, 19) getrieben wird, drehfest mit der Antriebs- (5, 6) oder Abtriebswelle (14) verbunden ist oder drehbar auf der Antriebs- (5, 6) oder Abtriebswelle (14) gelagert ist.

2. Wechselgetriebe nach Anspruch 1,
**dadurch gekennzeichnet,**
**dass** das drehrichtungsabhängig sperrend gelagerte Zahnrad (19) mittels einer Freilaufeinrichtung (24) auf der Antriebs- (5, 6) oder Abtriebswelle (14) gelagert ist.

3. Wechselgetriebe nach einem der Ansprüche 1 bis 2,
**dadurch gekennzeichnet,**
**dass** das drehrichtungsabhängig sperrend gelagerte Zahnrad (19) auf der Abtriebswelle (14) gelagert ist.

4. Wechselgetriebe nach Anspruch 3,
**dadurch gekennzeichnet,**
**dass** das drehrichtungsabhängig sperrend gelagerte Zahnrad (19) drehfest mit der Abtriebswelle (14) verbunden ist, wenn das drehrichtungsabhängig sperrend gelagerte Zahnrad (19) durch das mit ihm in kämmendem Eingriff stehende Zahnrad (11) getrieben wird, und dass das drehrichtungsabhängig sperrend gelagerte Zahnrad (19) drehbar auf der Abtriebswelle (14) gelagert ist, wenn das teilsperrend gelagerte Zahnrad (19) durch die lagernde Abtriebswelle (14) getrieben wird.

5. Wechselgetriebe nach einem der Ansprüche 1 bis 4,
**dadurch gekennzeichnet,**
**dass** zwei Antriebswellen (5, 6) und eine Abtriebswelle (14) vorgesehen sind.

6. Wechselgetriebe nach Anspruch 5,
**dadurch gekennzeichnet,**
**dass** eine Antriebswelle ein Hohlwelle (5) und eine andere Antriebswelle eine zur Hohlwelle (5) konzentrisch verlaufende Vollwelle (6) ist.

7. Wechselgetriebe nach einem der Ansprüche 1 bis 6,
**dadurch gekennzeichnet,**
**dass** ein Kupplungssystem (2) mit jeweils einer Kupplungseinheit (3, 4) für jede Antriebswelle (5, 6) vorgesehen ist, wobei die Kraftübertragung jeweils nur zwischen Motor und einer einzigen Antriebswelle (5, 6) herstellbar ist.

8. Wechselgetriebe nach einem der Ansprüche 1 bis 7,
**dadurch gekennzeichnet,**
**dass** die Zahnräder (7, 8, 9, 10, 11, 12, 13) der Antriebswelle (5, 6) drehfest auf der jeweiligen Antriebswelle (5, 6) gelagert sind, und dass für die übrigen Zahnräder der Abtriebswelle (15, 16, 17, 18, 20, 21) wechselnd eine drehfeste oder eine drehbare Verbindung mit der Abtriebswelle (14) herstellbar ist.

9. Wechselgetriebe nach einem der Ansprüche 1 bis 8,
**dadurch gekennzeichnet,**
**dass** die drehfeste oder die drehbare Verbindung mittels einer Schaltmuffe (22), eines Drehmomentschalteinrichtungsgangrads bzw. einer Synchronisationseinrichtung herstellbar ist.
